# EUROPEAN PATENT APPLICATION

(11) **EP 3 597 468 A1**
(43) Date of publication of application: **22.01.2020**
(21) Application number: 19196268.7
(22) Date of filing: 29.07.2016
(51) Int. Cl.: B60K 35/00, B60W 50/14, B60W 40/10, B60W 40/105, B60W 40/02, B60R 1/00, G05D 1/02

(54) **AUTONOMOUS VEHICLE AND OPERATION METHOD THEREOF**

(30) Priority: 30.07.2015 US 201562199179 P; 02.05.2016 KR 20160054107; 28.07.2016 KR 20160095969
(62) Divisional of application: 16830877.3
(71) Applicant: Samsung Electronics Co., Ltd., Gyeonggi-do 16677 (KR)
(72) Inventor: Cronin, John, 16677 Gyeonggi-do (KR); Cronin, Seth Melvin, 16677 Gyeonggi-do (KR)
(74) Representative: Hylarides, Paul Jacques

(57) **Abstract**

Provided are an autonomous vehicle that displays a virtual driving environment image that replaces an actual driving environment via a display device disposed on a car window area of the autonomous vehicle and a method of operating the autonomous vehicle.

## Description

### TECHNICAL FIELD

The present invention relates to an autonomous vehicle and a method of operating the same.

### BACKGROUND ART

Recently, interest in an autonomous vehicle is increasing. Particularly, in order to resolve traffic congestion due to an increased number of cars and safely avoid obstacles including pedestrians and other vehicles, various additional functions related to autonomous driving are being continuously developed. For example, there are a large number of algorithms related to a lane keeping system. Furthermore, as internet connectivity is expanded, the amounts of data generated by various devices or vehicles are rapidly increasing, and thus various services using the data are being introduced.

Therefore, a method and an autonomous vehicle for providing a passenger-friendly autonomous driving experience by using a variety of data are in demand.

### DETAILED DESCRIPTION OF THE INVENTION

### TECHNICAL PROBLEM

The present invention provides an autonomous vehicle and a method of operating the same.

### TECHNICAL SOLUTION

According to an aspect of the present invention, an autonomous vehicle may include a display device, which is disposed on a car window area of the autonomous vehicle; and a processor, which controls the display device to display a virtual driving environment image that replaces an actual driving environment around the autonomous vehicle.

Furthermore, the virtual driving environment image may be an image that shows a virtual driving environment around the autonomous vehicle that is viewed from a viewpoint inside the autonomous vehicle via the car window area.

Furthermore, the processor may obtain information regarding a driving route from a current location of the autonomous vehicle to a destination and generate virtual driving environment images corresponding to respective points on the driving route.

Furthermore, the autonomous vehicle may further include a motion sensing device for sensing motion of the autonomous vehicle, wherein the processor may control the display device to display the virtual driving environment images based on the sensed motion.

Furthermore, the motion sensing device may sense driving speed of the autonomous vehicle, and the processor may control an image changing rate of the virtual driving environment images displayed on the display device based on the sensed driving speed.

Furthermore, when there are the plurality of display devices, the processor may control image changing rates of the virtual driving environment images that are displayed by the plurality of display devices, based on the sensed motion.

Furthermore, the autonomous vehicle may further include an image sensor that captures images of the actual driving environment, wherein the processor may generate the virtual driving environment image based on the captured images of the actual driving environment.

Furthermore, the processor may generate the virtual driving environment image to which an object shown in the images of the actual driving environment is reflected.

Furthermore, the processor may generate the virtual driving environment image based on a virtual reality selected by a passenger of the autonomous vehicle from among a plurality of virtual realities.
Furthermore, the processor may determine whether a pre-set event has occurred and, when the pre-set event has occurred, control the display device, such that the passenger of the autonomous vehicle is able to see an actual driving environment corresponding to the pre-set event.
According to another aspect of the present invention, a method of operating an autonomous vehicle, the method may include obtaining a virtual driving environment image that replaces an actual driving environment around the autonomous vehicle; and controlling a display device disposed on a car window area of the autonomous vehicle to display the virtual driving environment image.
According to another aspect of the present invention, there is provided a non-transitory computer-readable recording medium having recorded thereon a computer program for implementing the method.

### ADVANTAGEOUS EFFECTS OF THE INVENTION

According to embodiments of the present invention, a virtual driving environment image that replaces an actual driving environment is provided to a passenger via a display device disposed on a front car window area of an autonomous vehicle, thereby providing a more realistic experience of a virtual driving environment to the passenger.

### DESCRIPTION OF THE DRAWINGS

FIG. 1 is a diagram showing an autonomous vehicle according to an embodiment;
FIG. 2 is a block diagram showing a hardware configuration of the autonomous vehicle according to an embodiment;
FIG. 3 is a block diagram of the autonomous vehicle according to an embodiment;
FIG. 4 is a diagram for describing car windows of the autonomous vehicle according to an embodiment;
FIG. 5 is a diagram for describing a display device according to an embodiment;
FIG. 6 is a diagram for describing a display device according to another embodiment;
FIG. 7 is a diagram showing a UI for determining a driving route according to an embodiment;
FIG. 8 is a diagram showing a UI for setting a virtual reality according to an embodiment;
FIG. 9 is a diagram for describing a virtual driving environment image;
FIG. 10 is a diagram showing an embodiment of generating virtual driving environment images corresponding to points at which an autonomous vehicle drives straight;
FIG. 11 is a diagram showing an embodiment of generating virtual driving environment images corresponding to points at which an autonomous vehicle turns right;
FIGS. 12 and 13 are diagrams showing embodiments of generating a plurality of virtual driving environment images corresponding to points on a driving route;
FIG. 14 is a diagram showing a camera of an autonomous vehicle according to an embodiment;
FIG. 15 is a diagram showing an embodiment that a processor generates a virtual driving environment image based on images of an actual driving environment.;
FIG. 16 is a diagram showing a user environment (UI) for selecting a car window area to display a virtual driving environment, according to an embodiment;
FIG. 17 is a diagram showing an embodiment of displaying virtual driving environment images on a car window area viewed by the eyes of a passenger;
FIG. 18 is a diagram showing a UI for selecting content to display on a display device, according to an embodiment;
FIG. 19 is a diagram showing an embodiment of displaying a movie on a display device;
FIG. 20 is a diagram showing a UI for setting up an event according to an embodiment;
FIG. 21 is a diagram showing an embodiment of providing information regarding a pre-set event to a passenger when the pre-set event has occurred;
FIG. 22 is a diagram showing an embodiment that a processor provides information regarding a pre-set event when the pre-set event has occurred;
FIG. 23 is a diagram showing an embodiment that a processor provides information regarding a pre-set event when the pre-set event has occurred;
FIG. 24 is a flowchart showing a method of operating an autonomous vehicle, according to an embodiment;
FIG. 25 is a flowchart showing operation 2420 in closer detail; and
FIG. 26 is a detailed flowchart of a method of operating an autonomous vehicle, according to an embodiment.

### MODE OF THE INVENTION

Hereinafter, embodiments of the present invention, chosen as examples only, will be described in detail below with reference to the accompanying drawings. The embodiments below are only examples embodying the present invention, and they do not limit the technical scope of the present invention. Those that may be easily inferred by one of ordinary skill in the art from the detailed description of the invention and embodiments will be understood as being within the scope of the present invention.

Furthermore, it shall not be understood that the terms "comprises" and/or "comprising" used herein specify the presence of all of stated components or steps, where some of the components or some steps may not be included or additional components or additional steps may be included. In addition, the terms "-er", "-or", and "module" described in the specification mean units for processing at least one function and operation and can be implemented by hardware components or software components and combinations thereof.

It will be understood that although the terms first and second are used herein to describe various elements, these elements should not be limited by these terms. These terms are only used to distinguish one element from another element.

Hereinafter, embodiments of the present invention will be described in detail below with reference to the accompanying drawings.

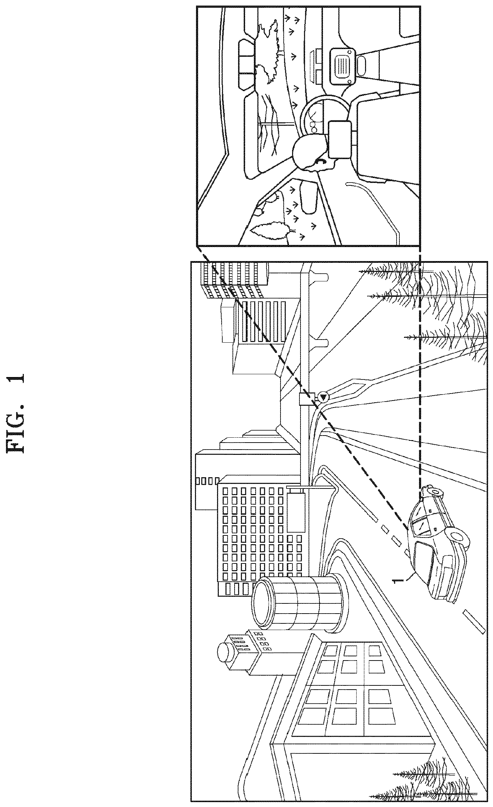

FIG. 1 is a diagram showing an autonomous vehicle 1 according to an embodiment.

The autonomous vehicle 1 may refer to a vehicle capable of driving without passenger intervention.

The autonomous vehicle 1 may display a virtual driving environment image that replaces an actual driving environment around the autonomous vehicle 1. In other words, the autonomous vehicle 1 may display an image that shows a virtual driving environment that is different from an actual driving environment around the autonomous vehicle 1. For example, when the autonomous vehicle 1 is driving in a city, there may be many buildings around the autonomous vehicle 1. However, the autonomous vehicle 1 may display a virtual driving environment image that shows a forest.

Therefore, based on the virtual driving environment image, a passenger of the autonomous vehicle 1 may receive an impression that the autonomous vehicle 1 is driving in the forest instead of the city.

The autonomous vehicle 1 may display a virtual driving environment image via a display device disposed in a car window area of the autonomous vehicle 1. Therefore, when a passenger looks at the car window area of the autonomous vehicle 1, the passenger may see a virtual driving environment image displayed on the display device disposed in the car window area, thereby receiving an impression of a virtual driving environment, instead of an actual driving environment, around the autonomous vehicle 1.

Furthermore, the autonomous vehicle 1 may display virtual driving environment images via a display device in conjunction with motion of the autonomous vehicle 1, and thus a passenger may receive a more realistic impression that the autonomous vehicle 1 is driving in a virtual driving environment.

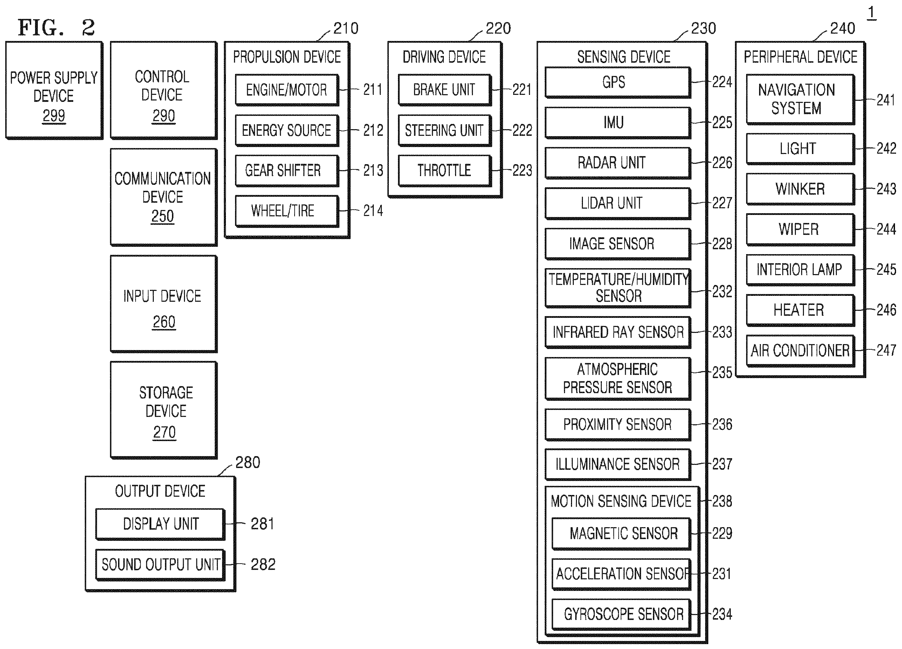

FIG. 2 is a block diagram showing a hardware configuration of the autonomous vehicle 1 according to an embodiment.

The autonomous vehicle 1 may include a propulsion device 210, a power supply device 299, a communication device 250, an input device 260, an output device 280, a storage device 270, a driving device 220, a sensing device 230, a peripheral device 240, and a control device 290. However, it will be obvious to one of ordinary skill in the art that the autonomous vehicle 1 may further include general-purpose components other than the components shown in FIG. 2, or some of the components shown in FIG. 2 may be omitted from the autonomous vehicle 1.

The propulsion device 210 may include an engine/motor 281, an energy source 282, a gear shifter 213, and a wheel/tire 214.

The engine/motor 281 may be an arbitrary combination of a combustion engine, an electric motor, a steam engine, and a Sterling engine. For example, if the autonomous vehicle 1 is a gas-electric hybrid car, the engine/motor 281 may include a gasoline engine and an electric motor.

The energy source 282 may be a source of energy that provides power to the engine/motor 281 entirely or partially. In other words, the engine/motor 281 may be configured to transform the energy source 282 into mechanical energy. For example, the energy source 282 may include at least one of gasoline, diesel, propane, other compressed gas-based fuels, ethanol, a solar panel, a battery, and at least one of other electric power sources. Alternatively, the energy source 282 may be at least one of a fuel tank, a battery, a capacitor, and a flywheel. The energy source 282 may provide energy to systems and devices of the autonomous vehicle 1.

The gear shifter 213 may be configured to transmit mechanical power from the engine/motor 281 to the wheel/tire 214. For example, the gear shifter 213 may include at least one of a gear box, a clutch, a differential, and a driving shaft. If the gear shifter 213 includes driving shafts, the driving shafts may include one or more axles that are configured to be coupled with the wheel/tire 214. The wheel/tire 214 may include various wheel/tire combinations, such as those for a monocycle, a 2-wheel vehicle, such as a bicycle and a motorcycle, a 3-wheel vehicle, or a 4-wheel vehicle like a car and a truck. Furthermore, the wheel/tire 214 may also include other wheel/tire combinations, such as that of a 6-wheel vehicle, for example. The wheel/tire 214 may include at least one wheel that is attached and fixed to the gear shifter 213 and at least one tire coupled with the rim of the at least one wheel that may contact a driving surface.

The driving device 220 may include a brake unit 221, a steering unit 222, and a throttle 223.

The steering unit 222 may include a combination of mechanisms configured to control a moving direction of the autonomous vehicle 1.

The throttle 223 may include a combination of mechanisms configured to control the speed of the autonomous vehicle 1 by controlling the operating speed of the engine/motor 281. Furthermore, the throttle 223 may control throttle opening, thereby controlling an amount of a fuel-air mixture gas introduced into the engine/motor 281 and controlling power and propulsion.

The brake unit 221 may include a combination of mechanisms configured to decelerate the autonomous vehicle 1. For example, the brake unit 221 may use friction to reduce the speed of the wheel/tire 214.

The sensing device 230 may include a plurality of sensors that are configured to detect information regarding an environment around the autonomous vehicle 1 and may further include one or more actuators that are configured to adjust locations and/or orientations of the sensors. For example, the sensing device 230 may include a global positioning system (GPS) 224, an inertial measurement unit (IMU) 225, a RADAR unit 226, a LIDAR unit 227, and an image sensor 228. Furthermore, the sensing device 230 may include at least one of a temperature/humidity sensor 232, an infrared ray sensor 233, an atmospheric pressure sensor 235, and an illuminance sensor 237, but is not limited thereto. Functions of the above-stated sensors are obvious to one of ordinary skill in the art based on their names, and thus, detailed descriptions thereof will be omitted.

Furthermore, the sensing device 230 may include a motion sensing device 238 capable of sensing motion of the autonomous vehicle 1. The motion sensing device 238 may include a magnetic sensor 229, an acceleration sensor 231, and a gyroscope sensor 234.

The GPS 224 may be a sensor configured to estimate a geographic location of the autonomous vehicle 1. In other words, the GPS 224 may include a transceiver configured to estimate the location of the autonomous vehicle 1 on the earth.

The IMU 225 may include a combination of sensors configured to detect changes of the location and orientation of the autonomous vehicle 1 based on inertial acceleration. For example, the combination of sensors may include acceleration sensors and gyroscopes.

The RADAR unit 226 may be a sensor configured to detect objects within an environment around the autonomous vehicle 1 by using wireless signals. Furthermore, the RADAR unit 226 may be configured to detect speeds and/or orientations of the objects.

The LIDAR unit 227 may be a sensor configured to detect objects within an environment around the autonomous vehicle 1 by using a laser beam. In detail, the LIDAR unit 227 may include a laser source and/or a laser scanner configured to emit a laser beam and a detector configured to detect reflection of the laser beam. The LIDAR unit 227 may be configured to operate in a coherent detection mode (e.g., using heterodyne detection) or an incoherent detection mode.

The image sensor 228 may be a still-image camera or a video camera configured to capture 3D images of the interior of the autonomous vehicle 1. For example, the image sensor 228 may include a plurality of cameras, and the plurality of cameras may be respectively located at a plurality of locations inside and outside the autonomous vehicle 1.

The peripheral device 240 may include a navigation system 241, a light 242, a blinker 243, a wiper 244, an interior lamp 245, a heater 246, and an air conditioner 247.

The navigation system 241 may be a system configured to determine a driving route of the autonomous vehicle 1. The navigation system 241 may be configured to dynamically update a driving route while the autonomous vehicle 1 is driving. For example, in order to determine a driving route of the autonomous vehicle 1, the navigation system 241 may utilize data from the GPS 224 and maps from the GPS 224 (maps from where though?).

The storage device 270 may include a magnetic disk drive, an optical disc drive, and a flash memory. Alternatively, the storage device 270 may be a portable USB data storage device. The storage device 270 may store system software for implementing embodiments of the present invention. System software for implementing embodiments of the present invention may be stored in a portable storage medium.

A communication device 250 may include at least one antenna for communicating with another device. For example, the communication device 250 may be used to wirelessly communicate with a cellular network, another wireless protocol, and a system via Wi-Fi or Bluetooth. The communication device 250 controlled by the control device 290 may transmit and receive wireless signals to and from a cellular network. For example, the control device 290 may execute a program included in the storage device 270 for the communication device 250 to transmit and receive wireless signals to and from a cellular network.

The input device 260 refers to a device for inputting data for controlling the autonomous vehicle 1. For example, the input device 260 may include a key pad, a dome switch, a touch pad ((capacitive overlay type, resistive overlay type, infrared beam type, surface acoustic wave type, integral strain gauge type, piezoelectric effect type, etc.), a jog wheel, and a jog switch, but is not limited thereto. Furthermore, the input device 260 may include a microphone, where the microphone may be configured to receive audio (e.g., a voice command) from a passenger of the autonomous vehicle 1. The output device 280 may output an audio signal or a video signal and may include a display device 281 and a sound output device 282.

The display device 281 may include at least one of a liquid crystal display, a thin film transistor-liquid crystal display, an organic light-emitting diode display, a flexible display, a 3D display, and an electrophoretic display. Furthermore, according to some embodiments, the output device 280 may include two or more display devices 281.

The sound output device 282 outputs audio data that is received from the communication device 250 or stored in the storage device 270. Furthermore, the sound output device 282 may include a speaker and a buzzer.

The input device 260 and the output device 280 may include network interfaces and may be embodied as a touch screen.

The control device 290 generally controls all operations of the autonomous vehicle 1. For example, the control device 290 executes programs stored in the storage device 270, thereby controlling all operations of the propulsion device 210, the driving device 220, the sensing device 230, the peripheral device 240, the communication device 250, the input device 260, the storage device 270, the output device 280, and the power supply device 299.

The power supply device 299 may be configured to provide electric power to some of or all of the components of the autonomous vehicle 1. For example, the power supply device 299 may include a rechargeable lithium-ion or lead-acid battery.

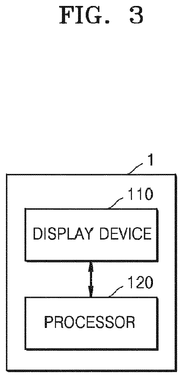

FIG. 3 is a block diagram of the autonomous vehicle 1 according to an embodiment.

The autonomous vehicle 1 may include a display device 110 and a processor 120. FIG. 3 shows that the autonomous vehicle 1 includes components related to the present embodiment. However, it will be obvious to one of ordinary skill in the art that the autonomous vehicle 1 may further include general-purpose components other than the components shown in FIG. 3.

The display device 110 may include the display device 281 of FIG. 2, whereas the processor 120 may correspond to the control device 290 of FIG. 2.

The display device 110 may be disposed in a car window area of the autonomous vehicle 1.

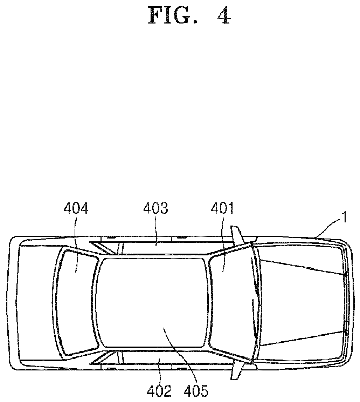

FIG. 4 is a diagram for describing car windows of the autonomous vehicle 1 according to an embodiment.

Car windows of the autonomous vehicle 1 may include a car window 401 corresponding to the front surface of the autonomous vehicle 1, a car window 402 corresponding to the right surface of the autonomous vehicle 1, a car window 403 corresponding to the left surface of the autonomous vehicle 1, a car window 404 corresponding to the rear surface of the autonomous vehicle 1, and a car window 405 corresponding to the roof of the autonomous vehicle 1. Therefore, the autonomous vehicle 1 may include a display device disposed in an area corresponding to at least one of the car windows 410, 402, 403, 404, and 405.

Although FIG. 4 shows that the autonomous vehicle 1 includes car windows corresponding to 5 areas according to an embodiment, the present invention is not limited thereto, and the locations, sizes, and shapes of the autonomous vehicle 1 may be different from those shown in FIG. 4.

Referring back to FIG. 3, according to an embodiment, the display device 110 may be a transparent display disposed in an area corresponding to a car window. According to another embodiment, the display device 110 may be a transparent display that replaces a car window. In other words, the display device 110 may be a transparent display that simultaneously functions as a display and a window. For example, the display device 110 may include transparent electrodes. In this case, the display device 110 may function as a display when a voltage is applied to the display device 110 and may function as a car window when no voltage is applied to the display device 110. According to another embodiment, the display device 110 may have a size identical to that of a car window area and may be disposed in the car window. According to another embodiment, the display device 110 may be slidably coupled with a car window.

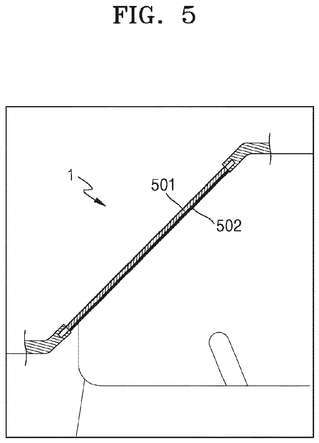

FIG. 5 is a diagram for describing a display device according to an embodiment.

The display device 110 may be a transparent display disposed in an area corresponding to a car window 501 of the autonomous vehicle 1. In other words, the display device 110 may be a transparent display 502 closely adhered to a surface of the car window 501. For example, the display device 110 may include a flexible thin-film type device capable of transmitting light therethrough and display a highly-bright image. The device may be any one of an LCD, an LED, and a transparent organic light-emitting diode (TOLED).

Although FIG. 5 shows the front car window of the autonomous vehicle 1 according to an embodiment, the display device 110 as a transparent display may also be disposed in any of the areas corresponding to the other car windows of the autonomous vehicle 1.

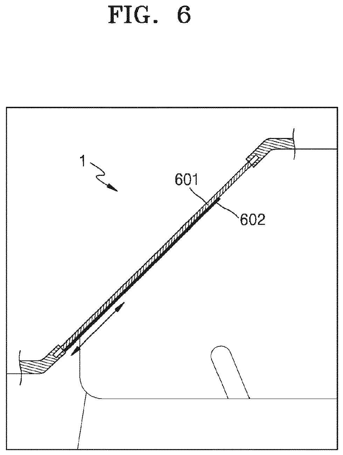

FIG. 6 is a diagram for describing a display device according to another embodiment.

The display device 110 may have a size identical to that of a car window 601 of the autonomous vehicle 1 and may be slidably coupled with the car window 601. In other words, the display device 110 may slide in a first direction to completely overlap the car window 601 and may slide in a second direction to not to overlap the car window 601 at all.

Although FIG. 6 shows the front car window of the autonomous vehicle 1 according to an embodiment, the slidable display device 110 as a transparent display may also be disposed in any of the areas corresponding to the other car windows of the autonomous vehicle 1.

Referring back to FIG. 3, the processor 120 may generate a virtual driving environment image that replaces an actual driving environment around the autonomous vehicle 1. A virtual driving environment image refers to an image showing a virtual driving environment outside the autonomous vehicle 1 viewed from a viewpoint inside the autonomous vehicle 1 via a car window area. In other words, a virtual driving environment image refers to an image showing a virtual driving environment outside the autonomous vehicle 1 that may be viewed by a passenger of the autonomous vehicle 1 via a car window area. A virtual driving environment may be a driving environment in a virtual reality that reflects some actual driving environments. For example, an actual driving environment may be a city road on a rainy day, whereas a virtual driving environment may be a city road on a sunny day. Therefore, a virtual driving environment image may display a virtual driving environment that a passenger may recognize as an actual driving environment when the passenger sees an environment outside the autonomous vehicle 1 via a car window area.

The processor 120 may generate a virtual driving environment image based on information regarding an actual driving environment around the autonomous vehicle 1 and information regarding a virtual reality. Information regarding an actual driving environment may include information regarding a driving route via which the autonomous vehicle 1 will drive to a destination and may include images of the actual driving environment. Furthermore, the processor 120 may obtain information regarding a virtual reality from the storage device 270 of FIG. 2 or from an external network. Furthermore, a virtual reality may be selected by a passenger from among a plurality of virtual realities.

The processor 120 may generate a virtual driving environment image based on information regarding a driving route from a current location of the autonomous vehicle 1 to a destination. In detail, the processor 120 obtain information regarding a driving route from a current location of the autonomous vehicle 1 to a destination and reflect the obtained driving route to a pre-set virtual reality, thereby generating a virtual driving environment image. For example, the processor 120 may generate a virtual driving environment image by reflecting an image of a road corresponding to a driving route to a virtual reality showing a waterfront area. For example, the processor 120 may obtain information regarding a destination from a passenger and determine a driving route from a current location of the autonomous vehicle 1 to the destination. In another example, the navigation system 241 of FIG. 2 may determine a driving route from the current location of the autonomous vehicle 1 to the destination, and the processor 120 may obtain information regarding the driving route from the navigation system 241.

The processor 120 may generate a virtual driving environment image corresponding to a point on a driving route. In other words, based on a point on a driving route at which the autonomous vehicle 1 may be located, the processor 120 may generate an image showing a virtual driving environment outside the autonomous vehicle 1 that a passenger may see via a car window area. In the same regard, the processor 120 may generate virtual driving environment images corresponding to respective points on the driving route of the autonomous vehicle 1.

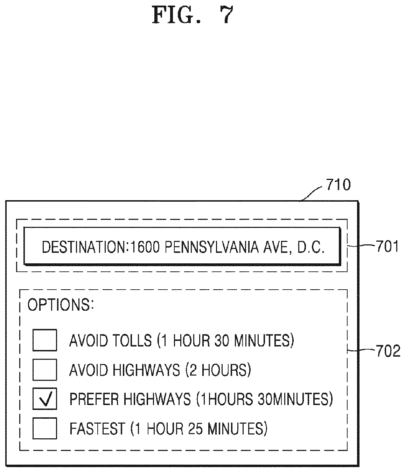

FIG. 7 is a diagram showing a user interface (UI) for determining a driving route according to an embodiment.

The processor 120 may provide a UI 710 for determining a driving route to a passenger. For example, the processor 120 may display the UI 710 on the display device 110 or on a separate display.

A passenger may input information regarding a desired destination to an area 701 for inputting destination information to the UI 710 by using the input device 260. In this regard, the passenger may input '1600 Pennsylvania Ave, D.C', which is a destination, to the area 701. Next, the passenger may select a driving route to the destination via an additional setting area 702. In other words, as shown in FIG. 7, the passenger may select a driving route including a highway from among a plurality of driving routes to the destination. Therefore, the processor 120 may determine the passenger-selected driving route including the highway as a driving route of the autonomous vehicle 1 to the destination.

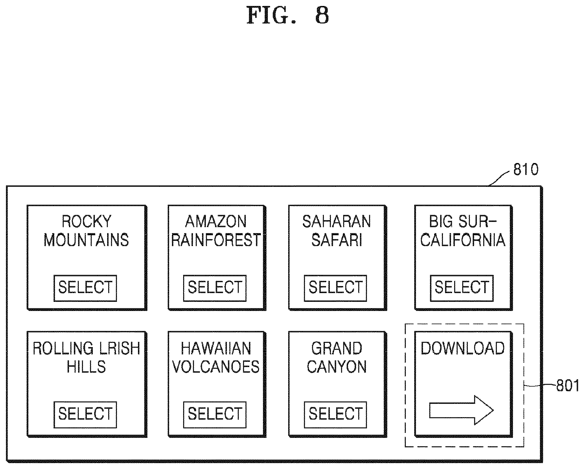

FIG. 8 is a diagram showing a UI for setting a virtual reality according to an embodiment.

The processor 120 may provide a UI 810 for setting a virtual reality to a passenger. The passenger may select any one of a plurality of virtual realities via the UI 810. In other words, the passenger may select a virtual reality corresponding to any one of Rocky Mountains, Amazon Rainforest, Saharan Safari, Grand Canyon, Hawaiian volcanoes, Big Sur (California), and Rolling Irish Hill via the UI 810. Furthermore, the passenger may select a download menu item 801 to download other virtual realities from an external network.

For example, the processor 120 may first determine a driving route of the autonomous vehicle 1 to a destination by providing the UI 710 of FIG. 7 to a passenger and then determine a virtual reality by providing the UI 810 of FIG. 8 to the passenger. Therefore, the processor 120 may generate a virtual driving environment image by using the determined driving route and the selected virtual reality.

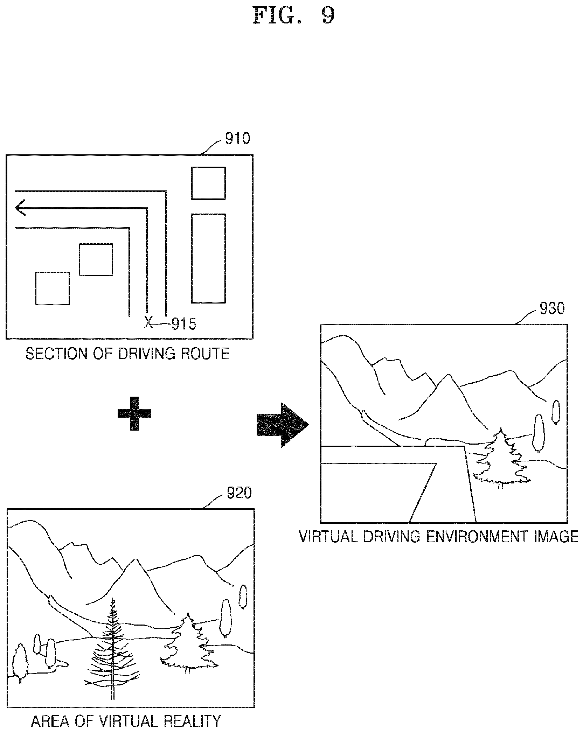

FIG. 9 is a diagram for describing a virtual driving environment image.

Based on a section 910 of a driving route of the autonomous vehicle 1 and an area 920 of a virtual reality, the processor 120 may generate a virtual driving environment image 930 corresponding to the section 910. In other words, the processor 120 may generate the virtual driving environment image 930 that shows a virtual driving environment to be seen by a passenger at a point 915 which the autonomous vehicle 1 will pass later. In detail, the processor 120 may recognize the road shape at the section 910 based on the point 915, reflect the recognized road shape to the area 920 of the virtual reality, and generate the virtual driving environment image 930. In other words, since the road shape at the section 910 includes a straight road and a left turn corner, the processor 120 may generate the virtual driving environment image 930 by reflecting the road shape including a straight road and a left turn corner. In the same regard, the processor 120 may recognize respective road shapes of the remaining sections of the driving route of the autonomous vehicle 1, reflect the respective recognized road shapes to the other areas of the virtual reality, and generate a plurality of virtual driving environment images constituting the entire driving route of the autonomous vehicle 1.

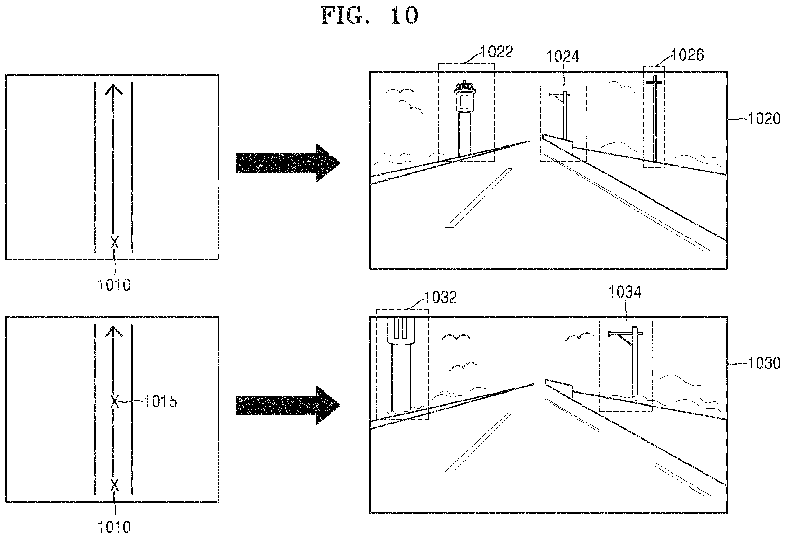

FIG. 10 is a diagram showing an embodiment of generating virtual driving environment images corresponding to points at which an autonomous vehicle drives straight.

The processor 120 may generate virtual driving environment images 1020 and 1030 based on points 1010 and 1015 on a driving route, respectively. When the autonomous vehicle 1 drives straight through the points 1010 and 1015, the processor 120 may generate the virtual driving environment image 1020 based on the autonomous vehicle 1 located at the point 1010 and generate the virtual driving environment image 1030 based on the autonomous vehicle 1 located at the point 1015.

The virtual driving environment image 1020 may show a virtual driving environment outside the autonomous vehicle 1 that a passenger may view via a car window area when the autonomous vehicle 1 is located at the point 1010, whereas the virtual driving environment image 1030 may show a virtual driving environment outside the autonomous vehicle 1 that a passenger may view via a car window area when the autonomous vehicle 1 is located at the point 1015. Therefore, some objects 1026 in the virtual driving environment of the virtual driving environment image 1020 may disappear from the virtual driving environment image 1030, and sizes and shapes of some objects 1022 and 1024 in the virtual driving environment of the virtual driving environment image 1020 may be changed in the virtual driving environment image 1030 and seen as close objects 1032 and 1034. Therefore, the processor 120 may successively provide the virtual driving environment images 1020 and 1030 to the passenger, such that the passenger may receive an impression that the autonomous vehicle 1 drives straight through the points 1010 and 1015 on the driving route. Furthermore, although the actual driving environment is a city road, the virtual driving environment shown in the virtual driving environment images 1020 and 1030 is a waterfront road. Therefore, the processor 120 may successively provide the virtual driving environment images 1020 and 1030 to the passenger, such that the passenger may receive an impression that the autonomous vehicle 1 drives straight on a waterfront road.

Furthermore, although FIG. 10 shows an example that the processor 120 generates the virtual driving environment image 1020 and the virtual driving environment image 1030 respectively corresponding to the point 1010 and the point 1015, in order to provide a more realistic driving experience to the passenger, the processor 120 may generate virtual driving environment images corresponding to more points on the driving route.

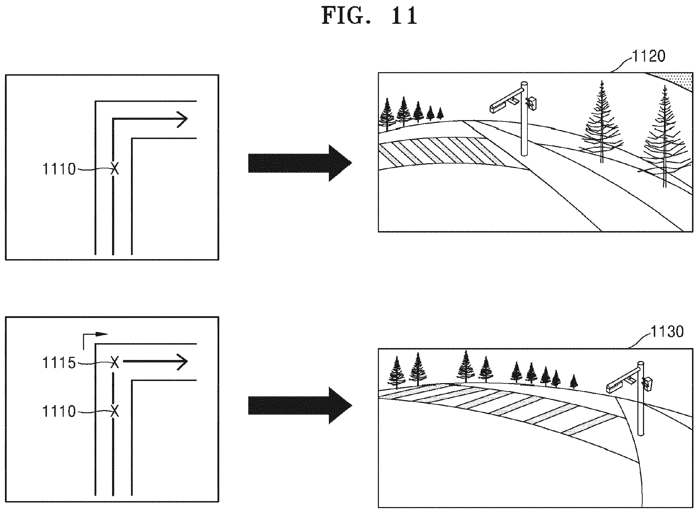

FIG. 11 is a diagram showing an embodiment of generating virtual driving environment images corresponding to points at which an autonomous vehicle turns right.

The processor 120 may generate virtual driving environment images 1120 and 1130 based on points 1110 and 1115 on a driving route, respectively. When the autonomous vehicle 1 turns right at the points 1110 and 1115, the processor 120 may generate the virtual driving environment image 1120 based on the autonomous vehicle 1 located at the point 1110 and generate the virtual driving environment image 1130 based on the autonomous vehicle 1 located at the point 1115.

The virtual driving environment image 1120 may show a virtual driving environment outside the autonomous vehicle 1 that a passenger may view via a car window area when the autonomous vehicle 1 is located at the point 1110, whereas the virtual driving environment image 1130 may show a virtual driving environment outside the autonomous vehicle 1 that a passenger may view via a car window area when the autonomous vehicle 1 is located at the point 1115. Therefore, the processor 120 may successively provide the virtual driving environment images 1120 and 1130 to the passenger, such that the passenger may receive an impression that the autonomous vehicle 1 turns right at the points 1110 and 1115 on the driving route. Furthermore, although the actual driving environment is a city road, the virtual driving environment shown in the virtual driving environment images 1120 and 1130 is a road between trees. Therefore, the processor 120 may successively provide the virtual driving environment images 1120 and 1130 to the passenger, such that the passenger may receive an impression that the autonomous vehicle 1 turns right on a road between trees.

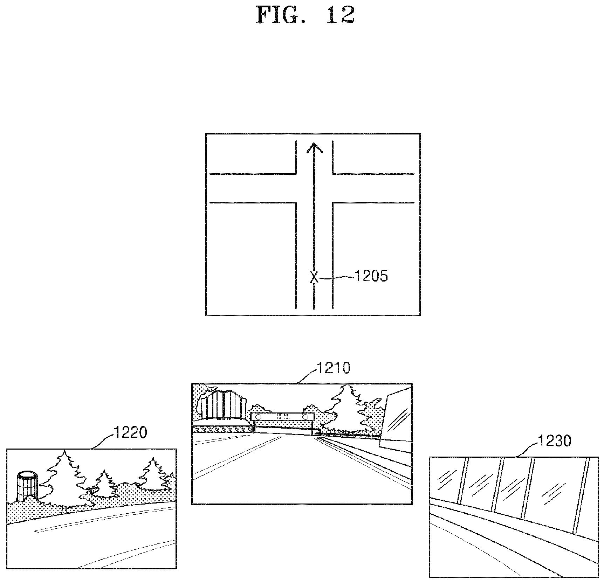

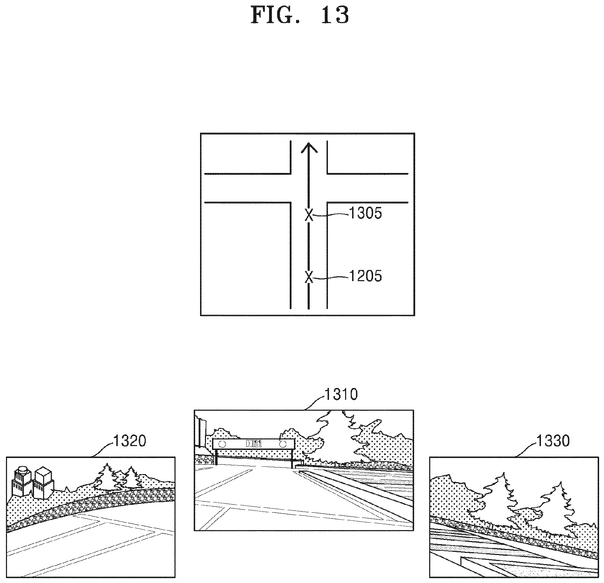

FIGS. 12 and 13 are diagrams showing embodiments of generating a plurality of virtual driving environment images corresponding to points on a driving route.

First, referring to FIG. 12, the processor 120 may generate a plurality of virtual driving environment images 1210, 1220, and 1230 corresponding to a point 1205 on a driving route. In detail, the processor 120 may generate the virtual driving environment image 1210 that shows a virtual driving environment outside the autonomous vehicle 1 that a passenger may view via a front car window area when the autonomous vehicle 1 is located at the point 1205, the virtual driving environment image 1220 that shows a virtual driving environment outside the autonomous vehicle 1 that the passenger may view via a left car window area when the autonomous vehicle 1 is located at the point 1205, and the virtual driving environment image 1230 that shows a virtual driving environment outside the autonomous vehicle 1 that the passenger may view via a right car window area when the autonomous vehicle 1 is located at the point 1205. Therefore, when the plurality of virtual driving environment images 1210, 1220, and 1230 are simultaneously displayed on display devices 110 disposed in the front car window area, the left car window area, and the right car window area, a more realistic virtual driving experience may be provided to the passenger.

Next, referring to FIG. 13, the processor 120 may generate a plurality of virtual driving environment images 1310, 1320, and 1330 corresponding to a point 1305 on a driving route. In detail, the processor 120 may generate the virtual driving environment image 1310 that shows a virtual driving environment outside the autonomous vehicle 1 that a passenger may view via a front car window area when the autonomous vehicle 1 is located at the point 1305, the virtual driving environment image 1320 that shows a virtual driving environment outside the autonomous vehicle 1 that the passenger may view via a left car window area when the autonomous vehicle 1 is located at the point 1305, and the virtual driving environment image 1330 that shows a virtual driving environment outside the autonomous vehicle 1 that the passenger may view via a right car window area when the autonomous vehicle 1 is located at the point 1305.

Therefore, when the plurality of virtual driving environment images 1210, 1220, and 1230 corresponding to the point 1205 and the plurality of virtual driving environment images 1310, 1320, and 1330 corresponding to the point 1305 are successively displayed on display devices 110 disposed in the front car window area, the left car window area, and the right car window area, a more realistic virtual driving experience that the autonomous vehicle 1 drives straight through the points 1205 and 1305 on the driving route may be provided to the passenger. Furthermore, although the actual driving environment is a rainy road, the virtual driving environment in the plurality of virtual driving environment images 1210, 1220, 1230, 1310, 1320, and 1330 are sunny roads, the processor 120 may successively provide the plurality of virtual driving environment images 1210, 1220, and 1230 corresponding to the point 1205 and the plurality of virtual driving environment images 1310, 1320, and 1330 corresponding to the point 1305 to the passenger, such that the passenger may receive an impression that the autonomous vehicle 1 drives straight on a sunny road.

Furthermore, although the embodiment shown in FIGS. 12 and 13 is described above in relation to the front car window, the left car window, and the right car window, the processor 120 may generate a virtual driving environment image showing an outside virtual driving environment that the passenger may view through another car window of the autonomous vehicle 1.

Referring back to FIG. 3, the processor 120 may generate a virtual driving environment image based on images of an actual driving environment around the autonomous vehicle 1. In detail, the processor 120 may generate a virtual driving environment image that reflects shapes of objects shown in the images of the actual driving environment. For example, the processor 120 may generate a virtual driving environment image reflecting the shape of a road shown in the images of the actual driving environment. Furthermore, the processor 120 may generate a virtual driving environment image that reflects a moving trajectory or a changing rate of an object shown in the images of the actual driving environment. For example, the processor 120 may generate a virtual driving environment image that reflects a moving trajectory or a speed of a vehicle shown in the images of the actual driving environment.

For example, the image sensor 228 of FIG. 2 may capture images of an actual driving environment around the autonomous vehicle 1, and the processor 120 may generate a virtual driving environment image based on the images of the actual driving environment captured by the image sensor 228. In another example, the processor 120 may obtain images of the actual driving environment around the autonomous vehicle 1 from an external network.

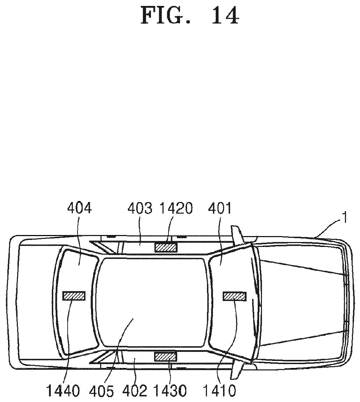

FIG. 14 is a diagram showing a camera of an autonomous vehicle according to an embodiment. Referring to FIG. 14, as examples of the image sensor 228, cameras 1410, 1420, 1430, and 1440 may be installed on outer surfaces of car windows 401, 402, 403, and 404 of the autonomous vehicle 1. In other words, the cameras 1410, 1420, 1430, and 1440 may be installed on outer surfaces of the car window 401 corresponding to the front surface of the autonomous vehicle 1, the car window 403 corresponding to the left surface of the autonomous vehicle 1, the car window 402 corresponding to the right surface of the autonomous vehicle 1, and the car window 404 corresponding to the rear surface of the autonomous vehicle 1, respectively.

Therefore, the cameras 1410, 1420, 1430, and 1440 may capture and obtain images of an actual driving environment outside the autonomous vehicle 1 that a passenger may see through car window areas.

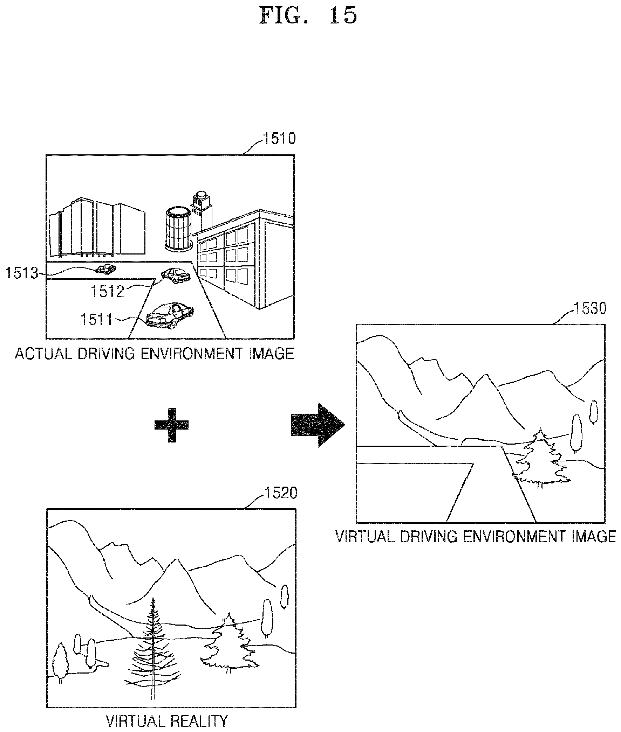

FIG. 15 is a diagram showing an embodiment that a processor generates a virtual driving environment image based on images of an actual driving environment.

The image sensor 228 may be installed on the front car window of the autonomous vehicle 1 and may capture images of an actual driving environment that a passenger may see through the front car window of the autonomous vehicle 1. The processor 120 may obtain an actual driving environment image 1510 captured by the image sensor 228. Furthermore, the processor 120 may obtain a virtual reality 1520 obtained by the passenger. Therefore, the processor 120 may generate a virtual driving environment image 1530 based on the actual driving environment image 1510 and the virtual reality 1520.

For example, the processor 120 may recognize the road shape based on the actual driving environment image 1510, reflect the recognized road shape to the virtual reality 1520, and generate the virtual driving environment image 1530. In other words, since the road shape of the actual driving environment image 1510 includes a straight road and a left turn corner, the processor 120 may generate the virtual driving environment image 1530 by reflecting the road shape including a straight road and a left turn corner to the virtual reality 1520. Therefore, when the virtual driving environment image 1530 is displayed on the display device 110 disposed on the front car window area of the autonomous vehicle 1, the passenger may recognize the virtual driving environment image 1530 as an actual driving environment image. Furthermore, the processor 120 may recognize an object shown in the actual driving environment image 1510 and determine whether to reflect the recognized object to the virtual driving environment image 1530. For example, the processor 120 may determine to reflect objects shown in the actual driving environment image 1510, such as a traffic light and a crosswalk, to the virtual driving environment image 1530. Furthermore, as shown in FIG. 15, the processor 120 may recognize vehicles 1511, 1512, and 1513 on the road in the actual driving environment image 1510 and may determine not to show the recognized vehicles 1511, 1512, and 1513 in the virtual driving environment image 1530.

In another example, the processor 120 may recognize a road area based on the actual driving environment image 1510 and replace areas of the actual driving environment image 1510 other than the recognized road area with the virtual reality 1520. In other words, if the actual driving environment image 1510 shows a road area between buildings and the virtual reality 1520 shows a forest with many trees, the processor 120 may replace areas of the actual driving environment image 1510 corresponding to the buildings with areas corresponding to the forest and generate the virtual driving environment image 1530.

In another example, the processor 120 may recognize a driving route of the autonomous vehicle 1 based on the road area shown in the actual driving environment image 1510 and generate not only the virtual driving environment image 1530, but also other virtual driving environment images corresponding to respective points on the driving route.

Although FIG. 15 shows an example that the virtual driving environment image 1530 is generated by using a camera installed on the front car window area of the autonomous vehicle 1, the processor 120 may generate other virtual driving environment images by using cameras installed on other car windows of the autonomous vehicle 1 in the same regard. In other words, the processor 120 may generate other virtual driving environment images to be displayed on display devices 110 disposed on the other car window areas by using actual driving environment images obtained via cameras installed on the other car windows of the autonomous vehicle 1.

Referring back to FIG. 3, the processor 120 may control the display device 110 disposed on a car window area of the autonomous vehicle 1 to display a virtual driving environment image.

Therefore, when a passenger sees a car window area from the inside of the autonomous vehicle 1, the passenger may experience a virtual driving environment as if the virtual driving environment is an actual driving environment. In other words, the processor 120 may make the passenger make a mistake that the virtual driving environment shown in the virtual driving environment image is an actual driving environment.

The processor 120 may control the display device 110 to successively display virtual driving environment images corresponding to respective points on a driving route of the autonomous vehicle 1. In other words, the processor 120 may generate virtual driving environment images corresponding to respective points on a driving route and control the display device 110 to successively display the generated virtual driving environment images.

For example, referring to FIG. 10, the processor 120 may control the display device 110 disposed on a car window area to successively display the virtual driving environment images 1020 and 1030. Therefore, since a passenger may view the virtual driving environment images 1020 and 1030 that are successively displayed via the car window area, the passenger may experience the virtual driving environment shown in the virtual driving environment images 1020 and 1030 and receive an impression that the autonomous vehicle 1 drives in the virtual driving environment.

In the same regard, referring to FIG. 11, the processor 120 may control the display device 110 disposed on a car window area to successively display the virtual driving environment images 1120 and the 1130. Therefore, since the passenger may view the virtual driving environment images 1120 and the 1130 that are successively displayed via the car window area, the passenger may experience the virtual driving environment shown in the virtual driving environment images 1120 and the 1130, and thus the passenger may receive an impression that the autonomous vehicle 1 turns right in the virtual driving environment.

The processor 120 may control the display device 110 to display a virtual driving environment image in synchronization with motion of the autonomous vehicle 1. The processor 120 may obtain virtual driving environment images corresponding to motion that the autonomous vehicle 1 drives straight and virtual driving environment images corresponding to motion that the autonomous vehicle turns left or right as moving pictures. For example, the processor 120 may obtain virtual driving environment images corresponding to driving motion of the autonomous vehicle 1 from an external network. In another example, the processor 120 may generate virtual driving environment images corresponding to driving motion of the autonomous vehicle 1. Therefore, when the autonomous vehicle 1 drives straight, the processor 120 may control the display device 110 to play back virtual driving environment images corresponding to the straight driving of the autonomous vehicle 1 as moving pictures. Furthermore, when the autonomous vehicle 1 turns left or right, the processor 120 may control the display device 110 to play back virtual driving environment images corresponding to the left turn or the right turn of the autonomous vehicle 1 as moving pictures. Therefore, since the processor 120 may display virtual driving environment images via the display device 110 in synchronization with motion of the autonomous vehicle 1, the passenger may receive a more realistic impression that the autonomous vehicle 1 is driving in a virtual driving environment.

The motion sensing device 238 of FIG. 2 may sense motion of the autonomous vehicle 1, and the processor 120 may control the display device 110 to display virtual driving environment images based on motion of the autonomous vehicle 1 sensed by the motion sensing device 238. Motion of the autonomous vehicle 1 may include at least one of speed, acceleration, deceleration, roll, pitch, and yaw of the autonomous vehicle 1 and changes thereof, and the motion sensing device 238 may sense at least one of speed, acceleration, deceleration, roll, pitch, and yaw of the autonomous vehicle 1 and changes thereof. Furthermore, the motion sensing device 238 may sense the driving speed, location change, and direction change of the autonomous vehicle 1. Furthermore, the motion sensing device 238 may sense the driving state or stopped state of the autonomous vehicle 1. Furthermore, a car window of the autonomous vehicle 1 may display a virtual driving environment in correspondence to motion of the autonomous vehicle 1 controlled by the control device 290. In other words, the control device 290 may control motion of the autonomous vehicle 1, and a car window of the autonomous vehicle 1 may display images showing a virtual driving environment in correspondence to the motion of the autonomous vehicle 1.

Furthermore, the autonomous vehicle 1 may further include a playback device. The playback device may play back a virtual driving environment under the control of motion of the autonomous vehicle 1 by the control device 290, and a car window of the autonomous vehicle 1 may display a result of the playback of the playback device. In other words, the control device 290 may control motion of the autonomous vehicle 1, the playback device may play back images showing a virtual driving environment in correspondence to the motion of the autonomous vehicle 1, and the car window may display images that are played back by the playback device. For example, the virtual driving environment may be 3D graphic data, and the playback device may be a graphics processing unit (GPU).

The processor 120 may control the display device 110 to display virtual driving environment images corresponding to respective points on a driving route of the autonomous vehicle 1 based on motion of the autonomous vehicle 1. When the motion sensing device 238 senses a stopped state of the autonomous vehicle 1 while the display device 110 is successively displaying virtual driving environment images, the processor 120 may temporarily stop the successive display of the virtual driving environment images.

The processor 120 may control the image changing rate of virtual driving environment images displayed by the display device 110, based on motion of the autonomous vehicle 1. An image changing rate may refer to a time-based changing rate of virtual driving environment images displayed by the display device 110. In other words, an image changing rate may be a speed at which virtual driving environment images are displayed on the display device 110. For example, when the motion sensing device 238 senses the driving speed of the autonomous vehicle 1, the processor 120 may control an image changing rate of virtual driving environment images displayed by the display device 110 based on the sensed driving speed. For example, when the driving speed of the autonomous vehicle 1 increases, the processor 120 may increase the speed of displaying virtual driving environment images on the display device 110. On the contrary, when the driving speed of the autonomous vehicle 1 decreases, the processor 120 may reduce the speed of displaying virtual driving environment images on the display device 110. For example, in FIG. 10, when the driving speed of the autonomous vehicle 1 increases, the processor 120 may increase the speed of displaying the virtual driving environment images 1020 and 1030 on the display device 110, and thus a more realistic driving experience may be provided to the passenger via the virtual driving environment images 1020 and 1030 that are displayed at the increased speed.

Furthermore, when there are display devices 110, the processor 120 may control image changing rates of virtual driving environment images respectively displayed by the display devices 110 based on motion of the autonomous vehicle 1 sensed by the motion sensing device 238. In other words, for example, when the display devices 110 are respectively disposed on the front car window area, the right car window area, and the left car window area of the autonomous vehicle 1, the processor 120 may control an image changing rate regarding virtual driving environment images displayed on the display device 110 disposed on the left car window area and an image changing rate regarding virtual driving environment images displayed on the display device 110 disposed on the right car window area differently, based on motion of the autonomous vehicle 1 that turns right. In other words, in order to provide a more realistic driving experience to a passenger, when the autonomous vehicle 1 turns right, the processor 120 may control a speed of displaying virtual driving environment images on the display device 110 disposed on the left car window area to be faster than a speed of displaying virtual driving environment images on the display device 110 disposed on the right car window area.

When the display devices 110 are disposed on a plurality of car window areas, the processor 120 may determine a car window area to display virtual driving environment images from among the plurality of car window areas. For example, the processor 120 may determine a car window area to display virtual driving environment images from among the plurality of car window areas based on selection by a passenger.

Furthermore, in another example, from among the plurality of car window areas, the processor 120 may determine a car window area viewed by the eyes of a passenger as a car window area to display virtual driving environment images. For example, the image sensor 228 of FIG. 2 may detect the eyes of a passenger, and the processor 120 may determine a car window area viewed by the eyes of a passenger from among the plurality of car window areas as a car window area to display virtual driving environment images. Furthermore, for example, when there are passengers of the autonomous vehicle 1, a car window area viewed by the eyes of a pre-set passenger from among the passengers may be determined as a car window area to display virtual driving environment images. In another example, when there are passengers of the autonomous vehicle 1, the processor 120 may stop detecting the eyes of a passenger and determine a pre-set car window area as a car window area to display virtual driving environment images.

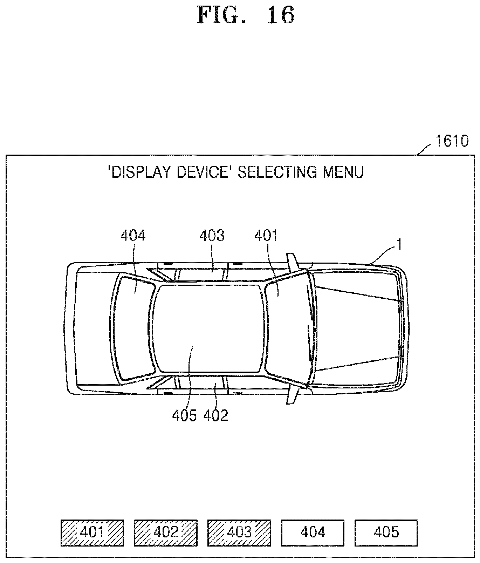

FIG. 16 is a diagram showing a UI for selecting a car window area to display a virtual driving environment, according to an embodiment.

When the display devices 110 are disposed on a plurality of car window areas, the processor 120 may provide a UI 1610 for selecting a car window area to display virtual driving environment images from among the plurality of car window areas to a passenger. In other words, as shown in FIG. 16, when the display devices 110 are disposed on the front car window 401 of the autonomous vehicle 1, the left car window 403 of the autonomous vehicle 1, the right car window 402 of the autonomous vehicle 1, the rear car window 404 of the autonomous vehicle 1, and the roof car window 405 of the autonomous vehicle 1, the processor 120 may provide the UI 1610 for selecting one of the front car window 401, the left car window 403, the right car window 402, the rear car window 404, and the roof car window 405 to display virtual driving environment images to the passenger. Therefore, the passenger may select a car window area to display virtual driving environment images via the UI 1610.

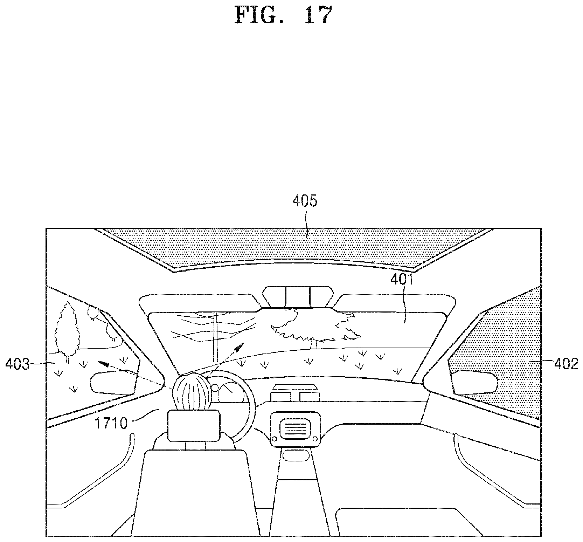

FIG. 17 is a diagram showing an embodiment of displaying virtual driving environment images on a car window area viewed by the eyes of a passenger.

The processor 120 may determine the car window areas 401 and 403 corresponding to the eyes of a passenger 1710 from among the plurality of car window areas 401, 402, 403, and 405 as car window areas for displaying virtual driving environment images. In detail, the image sensor 228 may detect the eyes of the passenger 1710 and determine the car window areas 401 and 403 that are viewed by the eyes of the passenger 1710 and are located within a particular angle from the eyes of the passenger 1710 as car window areas for displaying virtual driving environment images. When the passenger 1710 turns his or her head to the right, the processor 120 may determine car window areas 401 and 402 viewed by the eyes of the passenger 1710 as car window areas for displaying virtual driving environment images.

Referring back to FIG. 3, the processor 120 may control the display device 110 to display content that may be selected by a passenger. The content may be images or pictures provided via the Internet or computer communication or may be images provided by the autonomous vehicle 1. The processor 120 may provide a UI for selecting content to the passenger and may control the display device 110 to display content selected by the passenger.

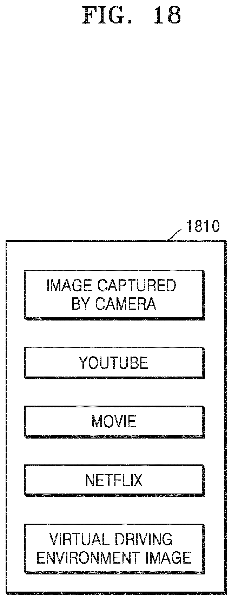

FIG. 18 is a diagram showing a UI for selecting content to display on a display device, according to an embodiment.

The processor 120 may provide a UI 1810 for selecting content to be displayed on the display device 110 to a passenger. In other words, the processor 120 may provide the UI 1810 for selecting YouTube, Movie Library, or Netflix. Furthermore, the processor 120 may provide the UI 1810 for selecting images captured by the image sensor 228 installed on a car window or provide the UI 1810 for selecting virtual driving environment images to the passenger.

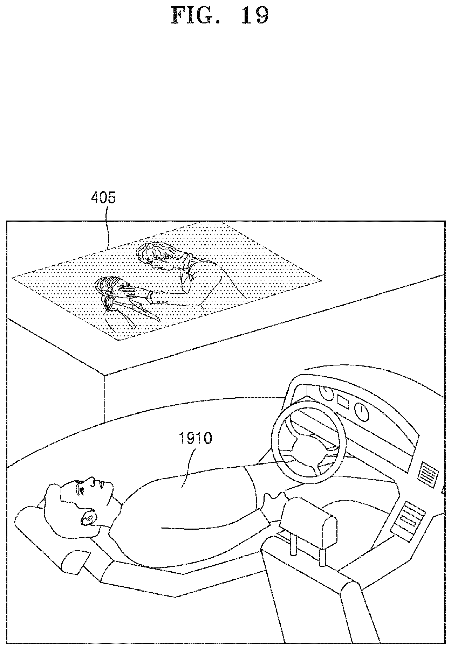

FIG. 19 is a diagram showing an embodiment of displaying a movie on a display device.

A passenger 1910 may select a movie as content to be displayed on the display device 110 via the UI 1810 of FIG. 18. Next, the passenger 1910 may lie down inside the autonomous vehicle 1 and see the roof car window 405.

Therefore, the processor 120 may control the display device 110 disposed on the roof car window 405 viewed by the eyes of the passenger 1910 to display the movie.

Referring back to FIG. 3, the processor 120 may determine whether a pre-set event has occurred. When a pre-set event has occurred, the processor 120 may provide information regarding the pre-set event to a passenger. For example, when a pre-set event has occurred, the processor 120 may control the display device 110 to display images of an actual driving environment related to the pre-set event. In other words, when a pre-set event has occurred, the processor 120 may control the display device 110, such that the passenger of the autonomous vehicle 1 may see an actual driving environment corresponding to the pre-set event. When a pre-set event has occurred while the display device 110 is displaying virtual driving environment images, the processor 120 may control the display device 110 to switch the virtual driving environment images to images of an actual driving environment related to the pre-set event. Furthermore, the processor 120 may control the display device 110 to simultaneously display virtual driving environment images and images of an actual driving environment related to a pre-set event. In other words, since the autonomous vehicle 1 is displaying virtual driving environment images or content via the display device 110 disposed on a car window, a passenger is unable to see an actual driving environment around the autonomous vehicle 1, and thus the processor 120 may provide information regarding a pre-set event to the passenger separately.

The pre-set event may be an event that the autonomous vehicle 1 has stopped for a pre-set time period. For example, when the autonomous vehicle 1 has stopped for 30 seconds or longer due to a traffic jam, the processor 120 may determine that a pre-set event has occurred. Next, the processor 120 may control the display device 110 to display the traffic jam, which is an actual driving environment related to the pre-set event.

The pre-set event may be an event that the weather around the autonomous vehicle 1 is changing. For example, when the weather around the autonomous vehicle 1 changes from sunny weather to rainy weather, the processor 120 may determine that a pre-set event has occurred. Next, the processor 120 may control the display device 110 to display the rainy weather captured by the image sensor 228, which is an actual driving environment related to the pre-set event.

The pre-set event may be an event that body condition of a passenger of the autonomous vehicle 1 is changed. For example, when the passenger falls asleep, the processor 120 may determine that a pre-set event has occurred. In detail, the image sensor 228 may photograph the eyes of the passenger and, when the eyes of the passenger are closed more than a reference degree compared to a normal state or the eyes of the passenger are completely closed for a reference time or longer, the processor 120 may determine that the passenger is sleeping. Next, in order to not to interfere with the sleep of the passenger, the processor 120 may stop displaying virtual driving environment images and turn off an interior lamp 245 of the autonomous vehicle 1.

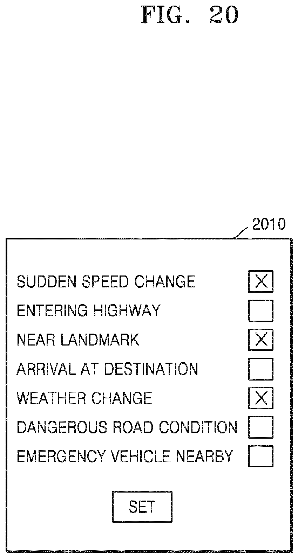

FIG. 20 is a diagram showing a UI for setting up an event according to an embodiment.

The processor 120 may provide a UI 2010 for setting up an event to a passenger. The passenger may set whether to receive information regarding a future event via the UI 2010 in advance, based on any of a plurality of events (e.g., an event that a vehicle suddenly changes its speed, an event that a vehicle enters a highway, an event that a vehicle is located near a landmark, an event that a vehicle has arrived at a destination, an event that the weather has changed, an event that surrounding road condition has become dangerous, and an event that an emergency vehicle is nearby). Therefore, when an event selected via the UI 2010 occurs, the processor 120 may provide information regarding the selected event to the passenger.

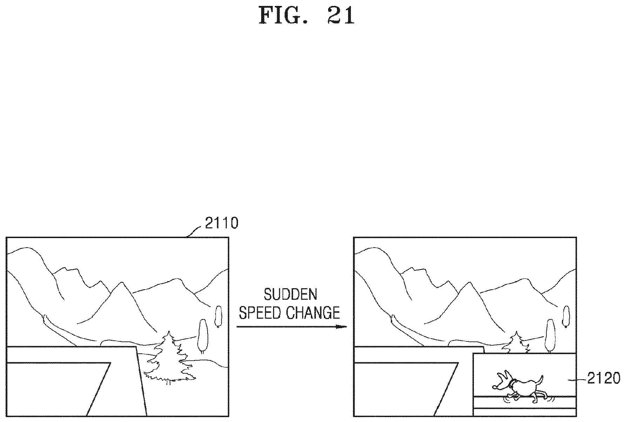

FIG. 21 is a diagram showing an embodiment of providing information regarding a pre-set event to a passenger when the pre-set event has occurred.

The processor 120 may control the display device 110 to display a virtual driving environment image 2810. The autonomous vehicle 1 may detect a sudden appearance of a wild animal while the autonomous vehicle 1 is driving, and thus the autonomous vehicle 1 may suddenly change its speed. Next, the processor 120 may determine that a pre-set event corresponding to a sudden change of speed has occurred. Next, the processor 120 may control the display device 110 that displays the virtual driving environment image 2810 to display an image 2820 that shows the wild animal, which is an actual driving environment related to the pre-set event, in an area of the display device 110.

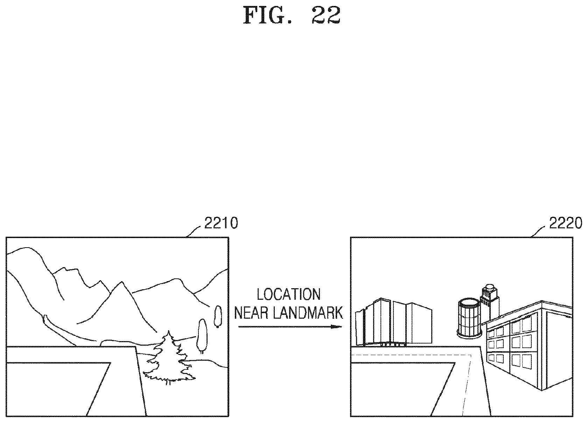

FIG. 22 is a diagram showing an embodiment that a processor provides information regarding a pre-set event when the pre-set event has occurred.

The processor 120 may control the display device 110 to display a virtual driving environment image 2210. Here, the autonomous vehicle 1 may recognize that the current location of the autonomous vehicle 1 is near a landmark, and the processor 120 may determine that a pre-set event that the autonomous vehicle 1 is located near a landmark has occurred. Next, the processor 120 may control the display device 110 to switch the virtual driving environment image 2210 to an image 2220 showing the landmark, which is an actual driving environment related to the pre-set event.

In another example, when the display device 110 is a transparent display and the autonomous vehicle 1 is located near a landmark, the virtual driving environment image 2210 may control the display device 110 displaying the virtual driving environment image 2210 to become transparent, such that a passenger may see a landmark image 2220 via the transparent display device 110.

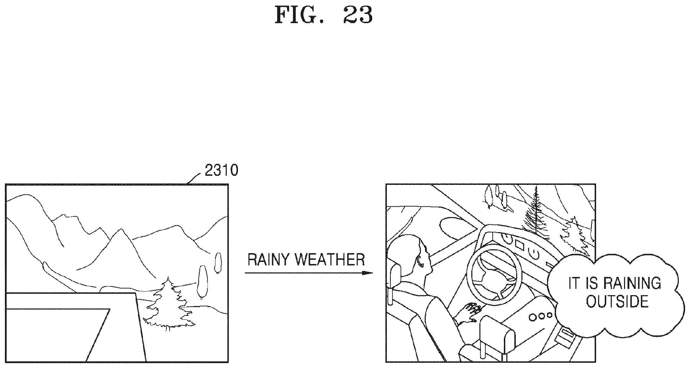

FIG. 23 is a diagram showing an embodiment that a processor provides information regarding a pre-set event when the pre-set event has occurred.

The processor 120 may control the display device 110 to display a virtual driving environment image 2310. While the autonomous vehicle 1 is driving, the processor 120 may recognize that the weather around the autonomous vehicle 1 is rainy and determine that a pre-set event has occurred.

Next, the processor 120 may provide information regarding rainy weather to a passenger via the sound output device 282.

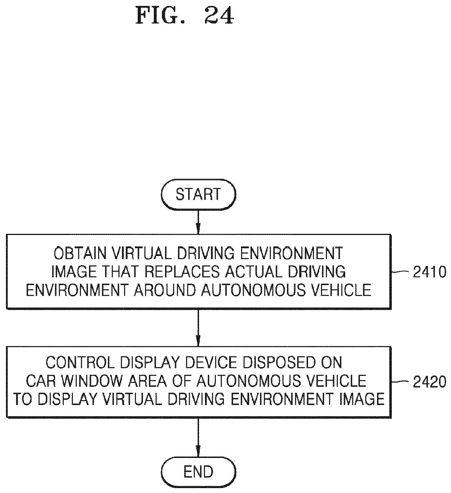

FIG. 24 is a flowchart showing a method of operating an autonomous vehicle according to an embodiment.

The method shown in FIG. 24 may be a method that is chronologically implemented by the autonomous vehicle 1 as described above.

In operation 2410, the autonomous vehicle 1 may obtain a virtual driving environment image that replaces an actual driving environment around the autonomous vehicle 1.

The autonomous vehicle 1 may generate a virtual driving environment image based on information regarding a driving route from a current location of the autonomous vehicle 1 to a destination. In detail, the autonomous vehicle 1 may obtain information regarding the driving route from the current location of the autonomous vehicle 1 to the destination and reflect the obtained information regarding the driving route to a pre-set virtual reality, thereby generating a virtual driving environment image. Furthermore, based on points on the driving route, the autonomous vehicle 1 may generate virtual driving environment images corresponding to the respective points on the driving route of the autonomous vehicle 1.

Based on images of an actual driving environment around the autonomous vehicle 1, the autonomous vehicle 1 may generate a virtual driving environment image. The autonomous vehicle 1 may obtain images of the actual driving environment around the autonomous vehicle 1 and generate a virtual driving environment image based on the obtained image regarding the actual driving environment around the autonomous vehicle 1. In detail, the autonomous vehicle 1 may recognize the road shape based on images of the actual driving environment around the autonomous vehicle 1 and reflect the recognized road shape to a virtual reality, thereby generating a virtual driving environment image.

The autonomous vehicle 1 may obtain a virtual driving environment image from an external network. The autonomous vehicle 1 may obtain virtual driving environment images corresponding to motion that the autonomous vehicle 1 drives straight and virtual driving environment images corresponding to motion that the autonomous vehicle turns left or right as moving pictures. Furthermore, the autonomous vehicle 1 may obtain a virtual driving environment image via the input device 260. In detail, a passenger may select a virtual reality via the input device 260 of the autonomous vehicle 1, and the autonomous vehicle 1 may obtain images showing the virtual reality selected by the passenger.

Operation 2420, the autonomous vehicle 1 may control a display device disposed on a car window area of the autonomous vehicle 1 to display the virtual driving environment image. The autonomous vehicle 1 may control the display device to successively display virtual driving environment images corresponding to respective points on a driving route of the autonomous vehicle 1. Furthermore, the autonomous vehicle 1 may control the display device to play back virtual driving environment images corresponding to motion that the autonomous vehicle 1 drives straight and virtual driving environment images corresponding to motion that the autonomous vehicle turns left or right as moving pictures

Furthermore, a car window of the autonomous vehicle 1 may display a virtual driving environment selected by the passenger in operation 2410. In other words, a car window of the autonomous vehicle 1 may display images showing a selected virtual driving environment.

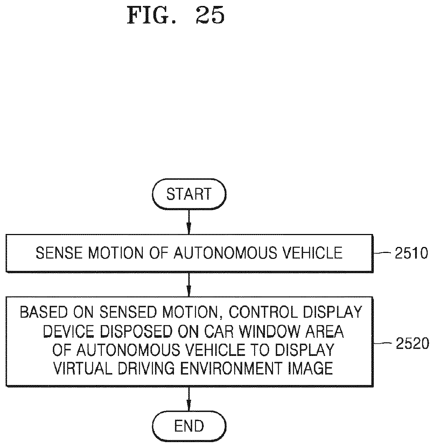

FIG. 25 is a flowchart showing operation 2420 in closer detail.

In operation 2510, the autonomous vehicle 1 may sense motion of the autonomous vehicle 1. The autonomous vehicle 1 may sense the driving speed, location change, and direction change of the autonomous vehicle 1. Furthermore, the autonomous vehicle 1 may sense a driving state and a stopped state of the autonomous vehicle 1.

In operation 2520, the autonomous vehicle 1 may control the display device to display virtual driving environment images based on a sensed motion.

The autonomous vehicle 1 may control the display device to display virtual driving environment images corresponding to the respective points on the driving route of the autonomous vehicle 1 based on a sensed motion. When a stopped state of the autonomous vehicle 1 is sensed while the display device is successively displaying virtual driving environment images, the processor 120 may temporarily stop the successive display of the virtual driving environment images.

Based on the sensed motion, the autonomous vehicle 1 may control an image changing rate of virtual driving environment images being displayed by the display device. The image changing rate may be a speed at which virtual driving environment images are displayed on the display device. Therefore, when the driving speed of the autonomous vehicle 1 is sensed, the autonomous vehicle 1 may control an image changing rate of virtual driving environment images being displayed on the display device based on the sensed speed.

When the autonomous vehicle 1 drives straight, the autonomous vehicle 1 may control, the display device to display virtual driving environment images corresponding to the straight-driving as moving pictures. Furthermore, when the autonomous vehicle 1 turns left or right, the autonomous vehicle 1 may control, the display device to display virtual driving environment images corresponding to the left-turn or the right-turn as moving pictures

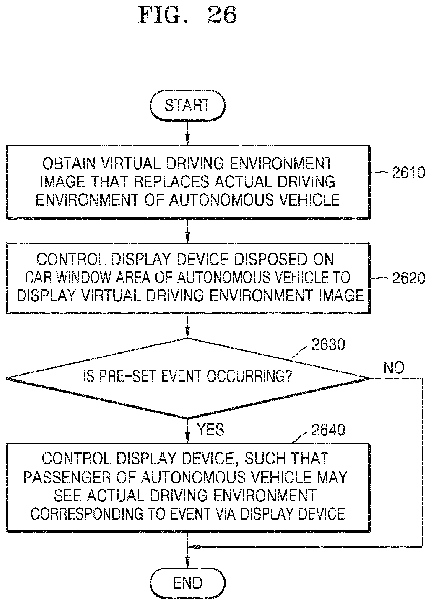

FIG. 26 is a detailed flowchart of a method of operating an autonomous vehicle according to an embodiment.

The method shown in FIG. 26 may be a method that is chronologically implemented by the autonomous vehicle as described above.

In operation 2610, the autonomous vehicle 1 may obtain a virtual driving environment image that replaces an actual driving environment around the autonomous vehicle 1. Operation 2610 may correspond to operation 2410 of FIG. 24.

In operation 2620, the autonomous vehicle 1 may control a display device disposed on a car window area of the autonomous vehicle 1 to display the virtual driving environment image. Operation 2620 may correspond to operation 2420 of FIG. 24.

In operation 2630, the autonomous vehicle 1 may determine whether a pre-set event has occurred. For example, the pre-set event may be at least one of an event that a vehicle suddenly changes its speed, an event that a vehicle enters a highway, an event that a vehicle is located near a landmark, an event that a vehicle has arrived at a destination, an event that the weather has changed, an event that surrounding road condition has become dangerous, and an event that an emergency vehicle is nearby.

When it is determined that a pre-set event has occurred, the autonomous vehicle 1 may control the display device of the autonomous vehicle 1, such that a passenger of the autonomous vehicle 1 may see an actual driving environment corresponding to the pre-set event via the display device. For example, when a pre-set event has occurred while the display device is displaying virtual driving environment images, the autonomous vehicle 1 may control the display device to switch the virtual driving environment images to images of an actual driving environment related to the pre-set event. Furthermore, the processor 120 may control the display device to simultaneously display virtual driving environment images and images of an actual driving environment related to a pre-set event.

The device described herein may comprise a processor, a memory for storing program data and executing it, a permanent storage such as a disk drive, a communications port for handling communications with external devices, and user interface devices, including a display, keys, etc. When software modules are involved, these software modules may be stored as program instructions or computer-readable codes executable on the processor on a computer-readable media such as read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. This media can be read by the computer, stored in the memory, and executed by the processor.

The present invention may be described in terms of functional block components and various processing steps. Such functional blocks may be realized by any number of hardware and/or software components configured to perform the specified functions. For example, the present invention may employ various integrated circuit components, e.g., memory elements, processing elements, logic elements, look-up tables, and the like, which may carry out a variety of functions under the control of one or more microprocessors or other control devices. Similarly, where the elements of the present invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those skilled in this art without departing from the spirit and scope of the present invention.

## Claims

1. An autonomous vehicle comprising:
a display device, which displays a virtual driving image at the autonomous vehicle; and
a processor, which controls the display device to display the virtual driving environment image that replaces an actual driving environment around the autonomous vehicle such that a passenger is not able to see the actual driving environment.

2. The autonomous vehicle of claim 1, wherein the virtual driving environment image is an image that shows a virtual driving environment around the autonomous vehicle that is viewed from a viewpoint inside the autonomous vehicle.

3. The autonomous vehicle of claim 1, wherein the processor obtains information regarding a driving route from a current location of the autonomous vehicle to a destination and generates virtual driving environment images corresponding to respective points on the driving route.

4. The autonomous vehicle of claim 3, further comprising a motion sensing device for sensing motion of the autonomous vehicle,
wherein the processor controls the display device to display the virtual driving environment images based on the sensed motion.

5. The autonomous vehicle of claim 4, wherein the motion sensing device senses a driving speed of the autonomous vehicle, and
the processor controls an image changing rate of the virtual driving environment images displayed on the display device based on the sensed driving speed,
wherein, when there are display devices, the processor controls image changing rates of the virtual driving environment images that are displayed by the display devices, based on the sensed motion.

6. The autonomous vehicle of claim 1, further comprising an image sensor that captures images of the actual driving environment,
wherein the processor generates the virtual driving environment image based on the captured images of the actual driving environment,
wherein the processor generates the virtual driving environment image to which an object shown in the images of the actual driving environment is reflected.

7. The autonomous vehicle of claim 1, wherein the processor generates the virtual driving environment image based on a virtual reality selected by a passenger of the autonomous vehicle from among a plurality of virtual realities.

8. The autonomous vehicle of claim 1, wherein the processor determines whether a pre-set event has occurred and, when the pre-set event has occurred, controls the display device, such that the passenger of the autonomous vehicle is able to see an actual driving environment corresponding to the pre-set event.

9. A method of operating an autonomous vehicle, the method comprising:
obtaining a virtual driving environment image that replaces an actual driving environment around the autonomous vehicle; and
controlling a display device at the autonomous vehicle to display the virtual driving environment image such that a passenger is not able to see the actual driving environment.

10. A non-transitory computer-readable recording medium having recorded thereon a computer program for implementing the method of claim 9.

11. The autonomous vehicle of claim 1, comprising:
an input device for a user to select a virtual driving environment; and
a display device that displays the selected virtual driving environment such that a passenger is not able to see the actual driving environment.

12. The autonomous vehicle of claim 11, wherein the display device displays the virtual driving environment image in correspondence to motion of the autonomous vehicle.

13. The autonomous vehicle of claim 12, wherein the motion comprises at least one of speed, acceleration, deceleration, roll, pitch, and yaw of the autonomous vehicle and changes thereof.

14. The autonomous vehicle of claim 11, further comprising a control device that controls motion of the autonomous vehicle,
wherein the display device displays the virtual driving environment in correspondence to control of the control device.

15. The autonomous vehicle of claim 14, further comprising a playback device that plays back the virtual driving environment under the control of the control device,
wherein the display device displays a result of playback of the playback device.
